# FASCICULE DE BREVET EUROPEEN

(11) **EP 2 917 536 B1**
(45) Date de publication et mention de la délivrance du brevet: **18.03.2020**
(21) Numéro de dépôt: 13803110.9
(22) Date de dépôt: 08.11.2013
(51) Int. Cl.: F02C 7/266, F02C 7/26, G05B 23/02

(54) **PROCÉDÉ DE SURVEILLANCE D'UNE SÉQUENCE D'ALLUMAGE D'UN MOTEUR DE TURBOMACHINE**
VERFAHREN ZUR ÜBERWACHUNG EINER ZÜNDSEQUENZ EINES TURBOMASCHINENTRIEBWERKS
METHOD FOR MONITORING AN IGNITION SEQUENCE OF A TURBOMACHINE ENGINE

(30) Priorité: 12.11.2012 FR 1260744
(43) Date de publication de la demande: 16.09.2015
(73) Titulaire: Safran Aircraft Engines, 75015 Paris (FR)
(72) Inventeur: FOIRET, Guilhem, F-77550 Moissy-Cramayel Cedex (FR); DEMAISON, François, F-77550 Moissy-Cramayel Cedex (FR); LAMOUREUX, Benjamin Pierre, F-77550 Moissy-Cramayel Cedex (FR)
(74) Mandataire: Regimbeau
(86) Numéro de dépôt international: PCT/FR2013/052677
(87) Numéro de publication internationale: WO 2014/072652

(56) Documents cités:
- EP-A2- 2 256 319
- FR-A1- 2 942 001
- US-A1- 2004 176 879
- US-A1- 2007 260 390
- US-A1- 2011 040 470

## Description

### DOMAINE DE L'INVENTION

L'invention concerne de manière générale les turbomachines, notamment des turboréacteurs et turbopropulseurs d'avions et les turbines à gaz industrielles.

Plus précisément, l'invention concerne la surveillance des dégradations d'un système pouvant impacter le bon déroulement d'une séquence de mise en fonctionnement d'un moteur d'une turbomachine.

### ARRIERE-PLAN TECHNOLOGIQUE

Une mauvaise séquence de mise en fonctionnement d'un moteur de turbomachine peut se traduire notamment par un mauvais allumage du mélange air-carburant dans le moteur. L'absence d'allumage peut avoir plusieurs origines, dont l'insuffisance voire l'absence de carburant, qui peuvent résulter de la dégradation de la pompe carburant, du doseur, ou des injecteurs, ou l'insuffisance voire l'absence d'énergie, qui peuvent résulter de la dégradation de la bougie d'allumage ou encore du système de génération d'étincelles.

Généralement, la dégradation du système du moteur qui entre en jeu dans une séquence de mise en fonctionnement du moteur est surveillée par le biais de la durée d'allumage du mélange air-carburant, qui est définie comme la durée entre l'injection de carburant dans la chambre de combustion du moteur et la détection de l'allumage de ce mélange.

Ainsi, pour un moteur donné, la durée d'allumage est utilisée comme indicateur de la dégradation du système servant dans la mise en fonctionnement d'un moteur d'une turbomachine. Cet indicateur est donc suivi au cours du temps, par mesure à chaque démarrage du moteur, et une alerte peut être levée en cas de déviation confirmée de la durée d'allumage mesurée par rapport à une durée de référence. Il est alors possible d'anticiper d'éventuelles défaillances du moteur et de vérifier le système afin de limiter les éventuels coûts engendrés par un non démarrage du moteur.

Par exemple, les documents FR 2 942 001 et US 2007/0260390 décrivent un procédé de surveillance de l'état de santé des équipements intervenant dans la capacité de démarrage d'un moteur, au cours duquel on détermine, entre autres, la durée d'allumage du moteur, et on compare la valeur obtenue à une durée d'allumage de référence attendue pour un moteur de référence, afin d'en déduire si un équipement du moteur présente une anomalie.

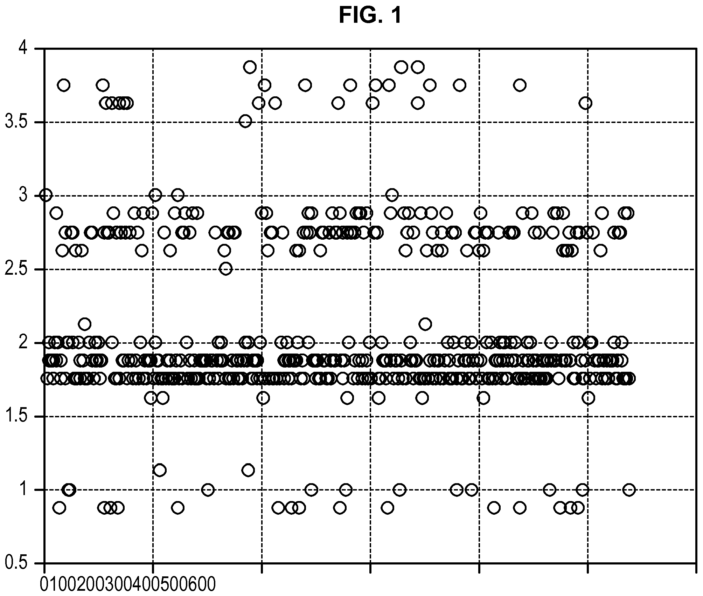

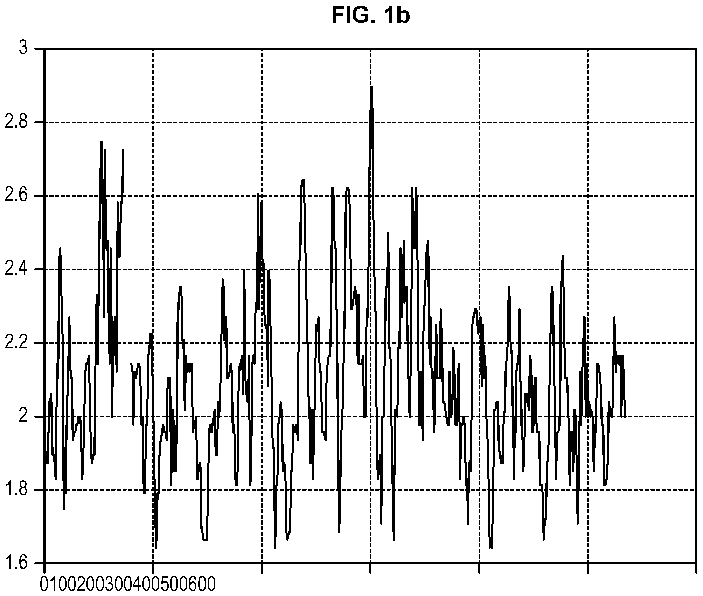

Toutefois, l'utilisation de la durée d'allumage comme un indicateur est limitée car sa mesure exhibe une dispersion trop importante pour être exploitable, étant donné qu'elle peut varier selon les conditions du démarrage du moteur sans que le système lui-même ne soit modifié pour autant. Le graphe de la figure 1, qui montre l'évolution de la durée de démarrage au cours de cinq cent démarrages consécutifs pour un moteur donné sain, c'est-à-dire non endommagé, illustre cette dispersion, tandis que le graphe de la figure 1b, qui montre l'évolution lissée sur cinq démarrages consécutifs de cet indicateur, illustre le bruit résultant de cette dispersion. Or ce bruit est bien trop important pour détecter de manière fiable des dégradations du système de mise en fonctionnement du moteur. L'écart-type est en effet de l'ordre de 1.2, de sorte que seules les dégradations de grande intensité peuvent être détectées.

Le document EP 2 256 319 quant à lui décrit un procédé de suivi des performances du moteur au cours duquel différents paramètres sont mesurés puis comparés à des valeurs préalablement enregistrées afin d'identifier d'éventuelles anomalies.

De manière générale, les procédés de surveillance de l'art antérieur proposent de surveiller un grand nombre de paramètres afin d'identifier plus facilement l'équipement à la source de l'anomalie. Néanmoins, ces procédés sont généralement lourds à mettre en œuvre et nécessitent de nombreux capteurs. Par ailleurs, ils ne permettent pas de suffisamment tenir compte de l'environnement du moteur, qui peut pourtant affecter la valeur des paramètres qui sont surveillés sans pour autant que les équipements du moteur intervenant dans son allumage aient subi de dégradations.

### RESUME DE L'INVENTION

Un objectif de l'invention est donc de proposer un procédé de surveillance d'une séquence de mise en fonctionnement d'un moteur d'une turbomachine, permettant de déterminer de manière fiable des dégradations de tout ou partie du système du moteur entrant en jeu lors de la mise en fonctionnement de la turbomachine afin d'améliorer la prédiction des pannes, qui soit rapide, simple et peu coûteux à mettre en œuvre.

Pour cela, l'invention propose un procédé de surveillance d'une séquence d'allumage d'un moteur, notamment de turbomachine, comprenant les étapes suivantes :
(i) détermination d'une durée d'allumage du moteur pour un paramètre de démarrage déterminé,
(ii) comparaison de la durée d'allumage du moteur ainsi déterminée à une durée d'allumage de référence attendue pour un moteur de référence et pour ce paramètre de démarrage,
(iii) déduction d'un indicateur de la mise en fonctionnement du moteur,
(iv) répétition des étapes (i) à (iii) pour ce paramètre de démarrage, pour chaque mise en fonctionnement du moteur de la séquence, et
(v) en fonction de l'évolution de l'indicateur, génération d'une alerte de dégradation de la séquence d'allumage du moteur.

Les durées d'allumage sont déterminées à partir d'un nombre de claquages d'une bougie d'allumage du moteur nécessaire pour mettre le moteur en fonctionnement et l'étape de comparaison est réalisée en comparant le nombre de claquages de la bougie d'allumage du moteur avec un nombre de claquages attendu d'une bougie d'allumage du moteur de référence.

Certaines caractéristiques préférées mais non limitatives du procédé de surveillance sont les suivantes :
- le paramètre de démarrage comprend l'un au moins des paramètres de la liste suivante :
   * un état thermique du moteur lors de la séquence de mise en fonctionnement,
   * un démarrage au sol ou un démarrage en vol,
   * une altitude à laquelle le moteur démarre,
   * une pression ambiante,
   * un régime de rotation du moteur correspondant à une injection de carburant dans une chambre de combustion du moteur,
   * un débit de carburant injecté dans une chambre de combustion au moment de l'allumage,
   * des caractéristiques de l'air en entrée d'une chambre de combustion du moteur,
- au cours de l'étape de comparaison, on détermine une différence entre le nombre de claquages de la bougie d'allumage du moteur nécessaire pour mettre le moteur en fonctionnement, avec un nombre de claquages d'une bougie d'allumage attendu pour mettre le moteur de référence en fonctionnement,
- une alerte de dégradation est générée lorsque l'indicateur est supérieur ou égal à un seuil déterminé,
- le moteur comprend deux bougies d'allumage, et l'indicateur est déterminé indépendamment pour chaque bougie d'allumage, et
- il comprend en outre une étape au cours de laquelle on détermine, pour un moteur de référence donné et un ensemble de valeurs du paramètre de démarrage, un ensemble de durées d'allumage de référence.

L'invention propose également un produit programme d'ordinateur comprenant des instructions de code pour l'exécution d'un tel procédé de surveillance, un moyen de stockage lisible par un équipement informatique sur lequel un tel produit programme d'ordinateur comprend des instructions de code pour l'exécution du procédé de surveillance, ainsi qu'un système de surveillance associé.

### BREVE DESCRIPTION DES DESSINS

D'autres caractéristiques, buts et avantages de la présente invention apparaîtront mieux à la lecture de la description détaillée qui va suivre, faite en référence aux figures annexées données à titre d'exemples non limitatifs et sur lesquelles :
La figure 1 est un graphe illustrant, pour un exemple de moteur donné, des durées d'allumage (en secondes) en fonction du nombre de démarrages,
La figure 1b illustre l'évolution lissée de la durée d'allumage moyennée sur cinq démarrages consécutifs (en secondes) en fonction du nombre de démarrages,
La figure 2 est un graphe dans lequel les durées d'allumage du graphe de la figure 1 ont été converties en nombre de claquages nécessaires de la bougie d'allumage en fonction du nombre de démarrages,
La figure 3 est un graphe illustrant, pour un exemple de moteur de référence, le nombre de claquages nécessaires de la bougie d'allumage pour mettre le moteur de référence en fonctionnement, en fonction d'un exemple de paramètre de démarrage, ici l'état thermique du moteur de référence (température EGT en °C), et

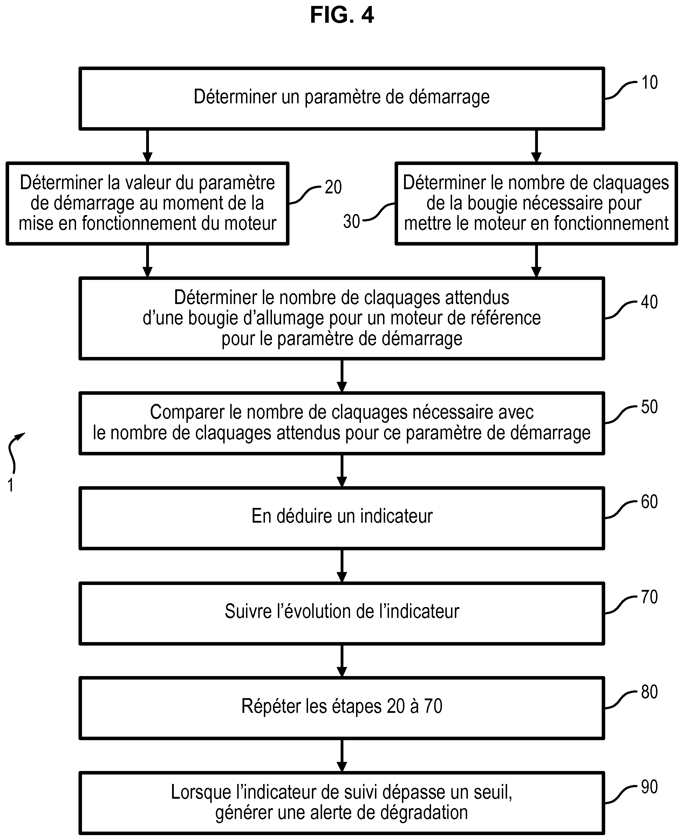

La figure 4 représente différentes étapes d'un exemple de réalisation du procédé de surveillance conforme à l'invention.

### DESCRIPTION DETAILLEE D'UN MODE DE REALISATION

L'invention propose de surveiller une séquence de mise en fonctionnement d'un moteur, notamment d'une turbomachine, en déterminant le contexte de démarrage du moteur, afin de pouvoir mesurer et comparer, dans ce contexte, la durée d'allumage du moteur avec une durée d'allumage de référence.

La durée d'allumage d'un moteur d'une turbomachine pendant une séquence de mise en fonctionnement dépend notamment de trois données.

Une première donnée concerne la qualité de l'écoulement d'air en sortie du compresseur haute pression du moteur. Si cet écoulement est trop important (par exemple suite à un retard de claquage d'une bougie d'allumage pendant la séquence de mise en fonctionnement) ou de mauvaise qualité (en raison d'une distorsion radiale ou azimutale des profils de vitesse de l'écoulement), l'alimentation en air de la chambre de combustion du moteur peut être dégradée, ce qui peut influencer l'allumage du moteur.

Une deuxième donnée concerne la quantité du carburant et sa pulvérisation par les injecteurs dans la chambre de combustion. En effet, de même que pour l'alimentation de la chambre en air, la dégradation d'un injecteur (cokéfaction du carburant stagnant dans l'injecteur ou déviation de la caractéristique débit / pression) peut perturber l'écoulement du carburant et former des poches d'instabilité autour de la chambre de combustion.

Une troisième donnée concerne la qualité de l'énergie apportée pour la combustion du mélange air-carburant. Il est en effet nécessaire que le système d'allumage, formé du boîtier, des câbles et des bougies, soit de bonne qualité et délivre la quantité d'énergie nécessaire, sachant qu'une partie de l'énergie est également apportée par le moteur qui n'est pas adiabatique.

On en déduit donc que la qualité, et donc la durée de l'allumage, dépendent principalement de l'état des différents systèmes intervenant dans la mise en fonctionnement du moteur, ainsi que du contexte de démarrage du moteur de la turbomachine.

Le procédé de surveillance 1 propose par conséquent d'éliminer tout ou partie de l'influence du contexte de mise en fonctionnement du moteur 10, afin de pouvoir identifier la dégradation éventuelle de ces systèmes.

Le contexte de mise en œuvre du moteur comprend l'ensemble des paramètres de démarrage pouvant avoir une influence sur la durée d'allumage du moteur. Ces paramètres de démarrage sont variables, et peuvent notamment comprendre :
- l'état thermique du moteur au démarrage,
- le fait que la mise en fonctionnement soit faite au sol ou en vol,
- l'altitude à laquelle le moteur démarre,
- la pression ambiante,
- le régime de rotation du moteur correspondant à une injection de carburant dans la chambre de combustion,
- le débit de carburant injecté dans la chambre de combustion au moment de l'allumage,
- les caractéristiques de l'air en entrée dans la chambre de combustion.

Le Demandeur s'est aperçu que l'état thermique du moteur était l'un des paramètres de démarrage ayant la plus grande influence sur la durée d'allumage du moteur de la turbomachine. Cependant, les autres paramètres de démarrage peuvent également être utilisés pour la surveillance de la mise en fonctionnement du moteur d'une turbomachine, seuls ou en combinaison.

Dans ce qui suit, un exemple de mise en œuvre d'un procédé de surveillance 1 conforme à l'invention va être décrit en utilisant l'état thermique du moteur au moment de la mise en fonctionnement du moteur comme paramètre de démarrage.

L'état thermique du moteur au moment de la mise en fonctionnement du moteur, c'est-à-dire lors de son démarrage, peut notamment être estimé par la mesure de la température d'échappement des gaz EGT du moteur au niveau d'une section donnée de celui-ci, par exemple à l'aide d'un thermocouple. Il peut par exemple s'agir des thermocouples T49.5, qui sont habituellement utilisés dans les distributeurs de la turbine basse-pression du moteur de la turbomachine, en aval de la chambre de combustion. On pourra notamment se référer à la demande de brevet française FR 2 971 543 au nom de la Demanderesse pour plus d'informations concernant la détermination de l'état thermique au démarrage du moteur à l'aide de la température d'échappement des gaz EGT.

En variante, l'état thermique du moteur peut également être estimé en déterminant la durée écoulée depuis le dernier arrêt du moteur, ou la température du carter (Tcase).

Au cours du procédé de surveillance 1 de la mise en fonctionnement du moteur, on détermine 20 alors l'état thermique du moteur, puis on estime 30 la durée de l'allumage du moteur dans cet état thermique (ou inversement). La durée ainsi obtenue peut alors être comparée 50 à une durée d'allumage de référence, préalablement déterminée pour un moteur de référence, de préférence du même type que le moteur de la turbomachine, et pour un état thermique identique ou similaire. On ne compare donc pas simplement la valeur mesurée pour la durée d'allumage à un seuil enregistré dans le système, mais à la valeur que devrait avoir la durée d'allumage si le moteur était sain, dans des conditions de démarrage identiques ou similaires, ces conditions de démarrage étant fixées par l'état thermique du moteur au moment de la mesure. Selon l'écart entre la valeur mesurée et la durée d'allumage de référence pour cet état thermique, on peut alors déterminer si la séquence d'allumage est ou non dégradée, et générer 90 le cas échéant une alerte.

La durée d'allumage peut être difficile à mesurer de manière fiable et rapide. Les mesures présentent en effet une imprécision de l'ordre de 125 ms, ce qui entraine une légère dispersion des durées d'allumage autour de quatre paliers, comme illustré en figure 1. On propose par conséquent de convertir la durée d'allumage, mesurée en déterminant le temps écoulé entre l'injection de carburant dans la chambre de combustion du moteur et la détection de l'allumage du mélange air-carburant, en un nombre de claquages nécessaires de la bougie d'allumage afin d'allumer le mélange air-carburant. En effet, l'initiation de la combustion du mélange ne peut avoir lieu que lors de la génération d'une étincelle par la bougie d'allumage. La fréquence de claquage des bougies d'allumage étant connue, ici de l'ordre de 1.25 Hz, on peut alors aisément transformer une durée d'allumage donnée en nombre de claquages qui ont été nécessaires pour mettre le moteur en fonctionnement. Il est alors possible d'estimer 30 la durée d'allumage de manière plus précise qu'en la mesurant directement.

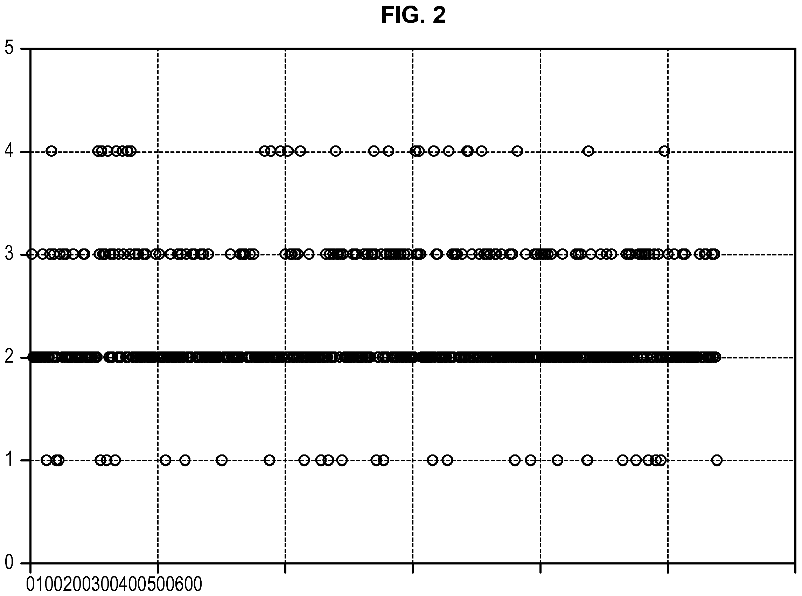

Le graphe ainsi obtenu est illustré en figure 2, sur laquelle les durées d'allumage ont été converties en nombre de claquages nécessaires, qui est un nombre entier pouvant prendre des valeurs discrètes comprises ici entre 1 et 4, ce qui permet non seulement de simplifier la mesure de la durée d'allumage, mais en outre de réduire les incertitudes sur les mesures et de faciliter les étapes ultérieures de comparaison 50.

Le nombre de claquages d'une bougie donnée d'un moteur de référence donné, et par conséquent sa durée d'allumage, peut alors être mesuré de manière simple et fiable pour un ensemble de valeurs d'état thermique différentes, par exemple pour des températures de gaz d'échappement EGT allant de 0°C à 600°C. On notera que par moteur de référence, on désigne ici un moteur d'un type similaire ou identique au moteur que l'on souhaite surveiller, dont le système qui entre en jeu dans la mise en fonctionnement du moteur ne présente pas de défaillance et permet donc d'obtenir des mesures saines.

Il est alors possible de construire 40, pour ce moteur de référence, une base de données permettant de définir le nombre de claquages attendu pour un état thermique du moteur donné.

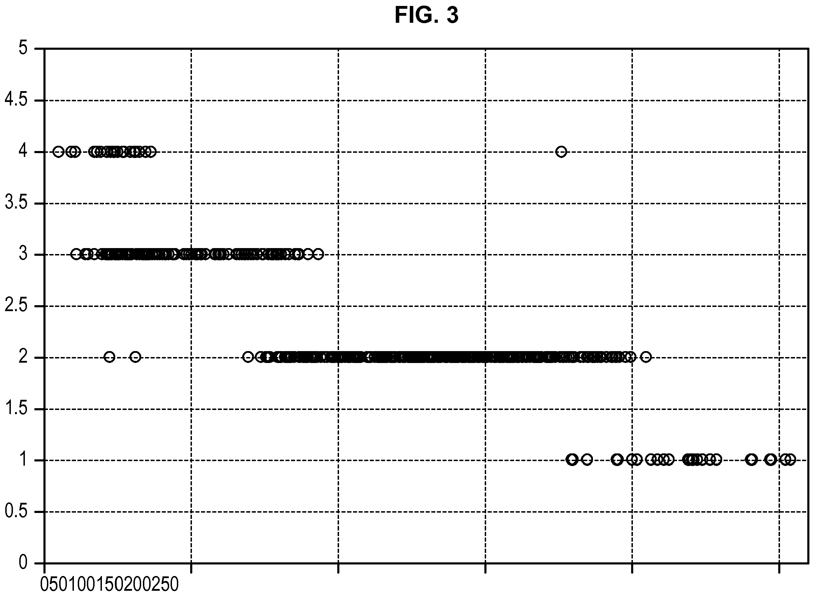

Un graphe représentant le nombre de claquages d'une bougie d'allumage nécessaire pour démarrer un moteur de référence en fonction de l'état thermique du moteur (température EGT) est illustré en figure 3. Pour ce moteur de référence, le nombre de claquages attendu est de 4 lorsque la température EGT est inférieure à 10°C, de 3 lorsque la température EGT est comprise entre 10°C et 80°C, de 2 lorsque la température EGT est comprise entre 80°C et 190°C, et de 1 lorsque la température EGT est supérieure à 190°C.

Les zones de chevauchement éventuelles des gammes de températures sont dues au fait que seul un paramètre du contexte de démarrage, ici l'état thermique du moteur au cours de son démarrage, a été pris en compte parmi l'ensemble des paramètres pouvant avoir une influence sur l'allumage du moteur. Toutefois, nous verrons par la suite que, grâce à l'indicateur de suivi choisi, la précision des mesures est suffisante pour réduire l'écart-type des mesures à 0.3, en comparaison avec l'écart-type de l'ordre de 1.2 pour l'indicateur conventionnel. L'écart-type a donc été divisé par 4 grâce à ce procédé de surveillance.

Lors de chaque démarrage du moteur, on détermine alors l'état thermique du moteur 20 et le nombre de claquages de la bougie d'allumage nécessaires 30 pour allumer le mélange air-carburant. Ce nombre de claquages est alors comparé 50 au nombre de claquages attendu pour cet état thermique, grâce à la base de données, en calculant la différence (ou résidu) entre le nombre de claquages déterminé et le nombre de claquages attendu afin d'obtenir un indicateur. L'évolution de cet indicateur peut alors être suivie 70 d'une mise en fonctionnement à l'autre de la turbomachine, par exemple par le biais d'une moyenne glissante.

Lorsque le résidu ou la moyenne glissante dépasse un seuil défini (étape 80), et éventuellement que ce dépassement est confirmé sur plusieurs vols, on en déduit alors que le système qui entre en jeu dans la mise en fonctionnement du moteur peut être dégradé. Une alerte peut alors être envoyée 90 à un opérateur désigné, par exemple un technicien, afin que le système puisse être vérifié et le cas échéant réparé.

Dans le cas où le moteur comprend plus d'une bougie d'allumage, ce qui est habituellement le cas dans la plupart des moteurs de turbomachines actuel, qui comprennent deux bougies d'allumage à des fins de redondance, utilisées alternativement pour homogénéiser l'état de dégradation du système, le résidu, et le cas échéant la moyenne glissante, sont calculés pour chacune des bougies indépendamment, afin de détecter une dégradation éventuelle des systèmes qui leur sont associé indépendamment. Par conséquent, la connaissance de la bougie d'allumage utilisée lors d'un démarrage donné est importante afin de déterminer si le résidu calculé correspond à l'une ou l'autre des bougies.

On obtient donc un indicateur de suivi exploitable, présentant un faible écart-type, et facile à obtenir. Par ailleurs, étant donnée la discrétisation des mesures du temps de démarrage, grâce à leur conversion en nombre de claquages de la bougie d'allumage, une dégradation peut être détectée dès lors que le nombre de claquages attendu augmente d'au moins une unité - c'est-à-dire lorsque le résidu est égal à 1 ou plus. Un résidu de 1 étant trois fois plus grand que la valeur de l'écart-type (qui est de l'ordre de 0.3), on en déduit que la détection des dégradations éventuelles du système est de bonne qualité, en comparaison notamment avec l'écart-type de 1.2 de l'indicateur habituel, avec lequel une petite dégradation du système ne pouvait être détectée en raison du bruit des mesures.

## Revendications

1. Procédé de surveillance (1) d'une séquence d'allumage d'un moteur, notamment de turbomachine, comprenant les étapes suivantes :
(i) détermination (30), à partir d'un nombre de claquages d'une bougie d'allumage du moteur nécessaire pour mettre le moteur en fonctionnement, d'une durée d'allumage du moteur pour un paramètre de démarrage déterminé,
(ii) comparaison (50) de la durée d'allumage du moteur ainsi déterminée à une durée d'allumage de référence attendue pour un moteur de référence et pour ce paramètre de démarrage, ladite étape de comparaison (50) étant réalisée en comparant le nombre de claquages de la bougie d'allumage du moteur avec un nombre de claquages attendu d'une bougie d'allumage du moteur de référence,
(iii) déduction (60) d'un indicateur de la mise en fonctionnement du moteur,
(iv) répétition des étapes (i) à (iii) pour ce paramètre de démarrage, pour chaque mise en fonctionnement du moteur de la séquence, et
(v) en fonction de l'évolution de l'indicateur, génération (90) d'une alerte de dégradation de la séquence d'allumage du moteur.

2. Procédé de surveillance (1) selon la revendication 1, dans lequel le paramètre de démarrage comprend l'un au moins des paramètres de la liste suivante :
- un état thermique du moteur lors de la séquence de mise en fonctionnement,
- un démarrage au sol ou un démarrage en vol,
- une altitude à laquelle le moteur démarre,
- une pression ambiante,
- un régime de rotation du moteur correspondant à une injection de carburant dans une chambre de combustion du moteur,
- un débit de carburant injecté dans une chambre de combustion au moment de l'allumage,
- des caractéristiques de l'air en entrée d'une chambre de combustion du moteur.

3. Procédé de surveillance (1) selon l'une des revendications 1 ou 2, dans lequel au cours de l'étape de comparaison (50), on détermine une différence entre le nombre de claquages de la bougie d'allumage du moteur nécessaire pour mettre le moteur en fonctionnement, avec un nombre de claquages d'une bougie d'allumage attendu pour mettre le moteur de référence en fonctionnement.

4. Procédé de surveillance (1) selon l'une des revendications 1 à 3, dans lequel une alerte de dégradation est générée lorsque l'indicateur est supérieur ou égal à un seuil déterminé.

5. Procédé de surveillance (1) selon l'une des revendications 1 à 4, dans lequel le moteur comprend deux bougies d'allumage, et l'indicateur est déterminé indépendamment pour chaque bougie d'allumage.

6. Procédé de surveillance (1) selon l'une des revendications 1 à 5, comprenant en outre une étape au cours de laquelle on détermine (40), pour un moteur de référence donné et un ensemble de valeurs du paramètre de démarrage, un ensemble de durées d'allumage de référence.

7. Produit programme d'ordinateur comprenant des instructions de code pour l'exécution, lorsque le programme est exécuté par un ordinateur, d'un procédé de surveillance (1) d'une séquence de mise en fonctionnement d'un moteur, notamment de turbomachine, selon l'une des revendications 1 à 6.

8. Moyen de stockage lisible par un équipement informatique sur lequel un produit programme d'ordinateur comprend des instructions de code pour l'exécution, lorsqu'elles sont exécutées par un ordinateur, d'un procédé de surveillance (1) d'une séquence de mise en fonctionnement d'un moteur, notamment de turbomachine, selon l'une des revendications 1 à 6.

9. Système de surveillance d'une séquence de mise en fonctionnement d'un moteur, notamment de turbomachine, comprenant des moyens configurés pour mettre en œuvre un procédé de surveillance (1) d'une séquence de mise en fonctionnement d'un moteur, notamment de turbomachine, selon l'une des revendications 1 à 6.

## Patentansprüche

1. Verfahren zur Überwachung (1) einer Zündsequenz eines Triebwerks, insbesondere einer Turbomaschine, das die folgenden Schritte umfasst:
(i) ausgehend von einer Anzahl der Überschläge einer Zündkerze des Triebwerks, die zur Inbetriebsetzung des Triebwerks erforderlich ist, Bestimmen (30) einer Zünddauer des Triebwerks für einen bestimmten Startparameter,
(ii) Vergleichen (50) der so bestimmten Zünddauer des Triebwerks mit einer für ein Bezugstriebwerk und für diesen Startparameter erwarteten Bezugszünddauer, wobei der Schritt zum Vergleichen (50) durch Vergleichen der Anzahl der Überschläge der Zündkerze des Triebwerks mit einer erwarteten Anzahl von Überschlägen einer Zündkerze des Bezugstriebwerks ausgeführt wird,
(iii) Ableiten (60) eines Indikators für die Inbetriebsetzung des Triebwerks,
(iv) Wiederholen der Schritte (i) bis (iii) für diesen Startparameter für jede Inbetriebsetzung des Triebwerks der Sequenz, und
(v) in Abhängigkeit von der Entwicklung des Indikators, Erzeugen (90) eines Alarms über die Verschlechterung der Zündsequenz des Triebwerks.

2. Überwachungsverfahren (1) nach Anspruch 1, wobei der Startparameter mindestens einen von den Parametern der folgenden Liste umfasst:
- einen thermischen Zustand des Triebwerks bei der Inbetriebsetzungssequenz,
- einen Start am Boden oder einen Start während des Fluges,
- eine Höhe, bei der das Triebwerk startet,
- ein Umgebungsdruck,
- eine Drehzahl des Triebwerks, die einer Kraftstoffeinspritzung in eine Verbrennungskammer des Triebwerks entspricht,
- ein Durchsatz des Kraftstoffs, der in die Verbrennungskammer am Zeitpunkt des Starts eingespritzt wird,
- Eigenschaften der in eine Verbrennungskammer des Triebwerks eintretenden Luft.

3. Überwachungsverfahren (1) nach einem der Ansprüche 1 oder 2, wobei während des Schritts zum Vergleichen (50) eine Differenz zwischen der Anzahl der Überschläge der Zündkerze des Triebwerks, die erforderlich ist, um das Triebwerk in Betrieb zu setzen, mit einer Anzahl der Überschläge einer Zündkerze bestimmt wird, die erwartet wird, um das Bezugstriebwerk in Betrieb zu setzen.

4. Überwachungsverfahren (1) nach einem der Ansprüche 1 bis 3, wobei ein Verschlechterungsalarm erzeugt wird, wenn der Indikator größer oder gleich einem bestimmten Schwellenwert ist.

5. Überwachungsverfahren (1) nach einem der Ansprüche 1 bis 4, wobei das Triebwerk zwei Zündkerzen umfasst und der Indikator unabhängig für jede Zündkerze bestimmt wird.

6. Überwachungsverfahren (1) nach einem der Ansprüche 1 bis 5, das ferner einen Schritt umfasst, während dem für ein gegebenes Bezugstriebwerk und eine Menge von Werten des Startparameters eine Menge von Bezugszünddauern bestimmt wird (40).

7. Computerprogrammprodukt, das Codebefehle umfasst, um, wenn das Programm durch einen Computer ausgeführt wird, ein Verfahren (1) zur Überwachung einer Inbetriebsetzungssequenz eines Triebwerks, insbesondere einer Turbomaschine, nach einem der Ansprüche 1 bis 6 auszuführen.

8. Speichermedium, das durch ein Computergerät lesbar ist, auf dem das Computerprogrammprodukt Codebefehle umfasst, um, wenn sie durch einen Computer ausgeführt werden, ein Verfahren (1) zur Überwachung einer Inbetriebsetzungssequenz eines Triebwerks, insbesondere einer Turbomaschine, nach einem der Ansprüche 1 bis 6 auszuführen.

9. System zur Überwachung einer Inbetriebsetzungssequenz eines Triebwerks, insbesondere einer Turbomaschine, das Mittel umfasst, die ausgestaltet sind, um ein Verfahren (1) einer Inbetriebsetzungssequenz eines Triebwerks, insbesondere einer Turbomaschine, nach einem der Ansprüche 1 bis 6 durchzuführen.

## Claims

1. A method for monitoring (1) an ignition sequence of an engine, in particular a turbomachine engine, comprising the following steps:
(i) determining (30), from a number of sparking operations of an ignition plug of the engine necessary to put the engine into operation, a time of ignition of the engine for a determined startup parameter,
(ii) comparing (50) the thus determined engine ignition time with a reference ignition time expected for a reference engine and for this startup parameter, said comparison step (50) being carried out by comparing the number of sparking operations of the ignition plug of the engine with a number of expected sparking operations of an ignition plug of the reference engine,
(iii) deducing (60) from an indicator that the engine is put into operation,
(iv) repeating the steps (i) to (iii) for this startup parameter, each time the sequence puts the engine into operation, and
(v) depending on the evolution of the indicator, generating (90) an alert of degradation of the ignition sequence of the engine.

2. The monitoring method (1) according to claim 1, wherein the startup parameter comprises at least one of the parameters from the following list:
- a thermal state of the engine during the operating sequence,
- a ground start or a flight start,
- an altitude at which the engine starts,
- an ambient pressure,
- a speed of rotation of the engine corresponding to an injection of fuel in a combustion chamber of the engine,
- a fuel flow rate injected into a combustion chamber at the time of ignition,
- characteristics of the air at the inlet of a combustion chamber of the engine.

3. The monitoring method (1) according to any of claims 1 or 2, wherein during the comparison step (50), a difference is determined between the number of sparking operations of the ignition plug of the engine necessary to put the engine into operation, and a number of sparking operations of an ignition plug expected to put the reference engine into operation.

4. The monitoring method (1) according to any of claims 1 to 3, wherein a degradation alert is generated when the indicator is greater than or equal to a determined threshold.

5. The monitoring method (1) according to any of claims 1 to 4, wherein the engine comprises two ignition plugs, and the indicator is determined independently for each ignition plug.

6. The monitoring method (1) according to any of claims 1 to 5, further comprising a step during which, for a given reference engine and a set of values of the startup parameter, a set of reference ignition times is determined (40).

7. A computer program product comprising code instructions for executing, when the program is run by a computer, a method for monitoring (1) a sequence of putting an engine, in particular a turbomachine engine, into operation according to any of claims 1 to 6.

8. A storage medium readable by computer equipment on which a computer program product comprises code instructions for executing, when run by a computer, a method for monitoring (1) a sequence of putting an engine, in particular a turbomachine engine, into operation according to any of claims 1 to 6.

9. A system for monitoring a sequence of putting an engine, in particular a turbomachine engine, into operation, comprising means configured to implement a method for monitoring (1) a sequence of putting an engine, in particular a turbomachine engine, into operation according to any of claims 1 to 6.
